# EUROPEAN PATENT APPLICATION

(11) **EP 1 830 087 A1**
(43) Date of publication of application: **05.09.2007**
(21) Application number: 05806318.1
(22) Date of filing: 14.11.2005
(51) Int. Cl.: F16C 41/00, F16C 19/18, G06K 19/00, B60B 35/02

(54) **BEARING DEVICE FOR WHEEL**

(30) Priority: 29.11.2004 JP 2004343447
(71) Applicant: JTEKT Corporation, Osaka-shi Osaka 542-8502 (JP)
(72) Inventor: SHIGE, Yoshifumi, c/o JTEKT Corp., Osaka-shi, Osaka 542-8502 (JP); KUBO, Tomomasa, c/o JTEKT Corp., Osaka-shi, Osaka 542-8502 (JP); MATSUO, Yoshiomi, c/o JTEKT Corp., Osaka-shi, Osaka 542-8502 (JP); ISHIGURO, Kenji, c/o JTEKT Corp., Osaka-shi, Osaka 542-8502 (JP)
(74) Representative: Meissner, Bolte & Partner
(86) International application number: PCT/JP2005/020832
(87) International publication number: WO 2006/057176

(57) **Abstract**

A bearing assembly is provided which provides for easy trace of a wheel bearing assembly shipped from a factory, which provides for easy determination of a lot number and a lot quantity of a product including the wheel bearing assembly of interest when need arises to inspect or replace the wheel bearing assembly of interest, and which provides for quick and easy quality control of the bearing assembly. The wheel bearing assembly includes: an outer ring member (3); an inner ring member (5) disposed radially inwardly of the outer ring member (3) in concentric relation therewith; and rolling elements (6) interposed between the outer ring member (3) and the inner ring member (5). An IC chip (20) is provided at a vehicle-outer end or vehicle-inner end of the bearing assembly.

## Description

### Technical Field

The present invention relates to a wheel bearing assembly (hereinafter, also referred to simply as "bearing assembly").

### Background Art

The wheel bearing assembly is used for rotatably holding a wheel to a vehicle body. Prior to factory shipment, the bearing assembly is marked with a manufacture date and a size thereof by stamping or laser processing for the purpose of product identification.

After completion of the bearing assembly, various reasons may give rise to need to inspect or replace the bearing assembly which is stored in a warehouse as stock, committed to distribution stage or put on market as assembled in a final product. In such cases, it is crucial to determine a serial number and a lot number of the bearing assembly as well as the lot quantity related to the bearing assembly. In the existing circumstances, however, the product is accompanied only with the information indicating the manufacture date and size thereof, as described above. It is therefore feared that the determination of the above information items may take long time.

There is another concern that the bearing assemblies of the same lot number may include components manufactured at different times so as to have some variations, although such variations are within design tolerances.

What is more, in a case where information on manufacture histories of products (including measured date of the products) is not systematically managed, the quality control of the products may require a large number of man-hours.

These problems may be solved to some extent by, for example, preparing a sheet on a per-product basis, the sheet carrying information about the aforesaid manufacture date and the like of the product. However, the management on a sheet-per-product basis is cumbersome and impracticable because large facilities are required.

The term "serial number", as used herein, means a different number assigned to each product, whereas the term "lot number", as used herein, means a number assigned to a set of a plurality of products manufactured at a certain factory in a certain period of time. In some cases, the bearing assemblies may be accompanied with the lot number and the serial numbers. In other cases, the bearing assemblies may be accompanied with only the lot number.

### DISCLOSURE OF THE INVENTION

In view of the foregoing, the invention has been accomplished and has an object to provide a bearing assembly which provides for easy trace of a product shipped from a factory, which provides for easy determination of a lot number, a serial number and a lot quantity when need arises to inspect or replace the product of interest, and which permits the quality control of the product to be accomplished in a small number of man-hours and in a quick and easy manner.

A wheel bearing assembly according to the invention comprises: an outer ring member; an inner ring member disposed radially inwardly of the outer ring member in concentric relation therewith; and rolling elements interposed between the outer ring member and the inner ring member, and
is characterized in that an IC chip is provided at a vehicle-outer end or a vehicle-inner end of the bearing assembly.

The bearing assembly of the invention is provided with the IC chip at the vehicle-outer end or vehicle-inner end thereof. The IC chip can store a variety of information items such as manufacture date, manufacture's factory, serial number, lot number and manufacture history. Since such an IC chip is provided at the end of the bearing assembly, even the bearing assembly mounted in a vehicle, for example, need not be disassembled for extracting the IC chip.

A relatively simple operation such as dismounting a tire from the vehicle permits the retrieval of the data (information) stored in the IC chip. Furthermore, if the bearing assembly as assembled in a product should be broken, the data (information) can be retrieved so long as the IC chip is not damaged. It is therefore easy to determine the manufacture date, serial number and such of the in-use bearing assembly.

On the contrary, this provides for easy determination of a lot number of a product including the in-use bearing assembly and of the quantity of the related lot. In addition, the manufacture history of the bearing assembly may be retrieved directly from the IC chip or retrieved from bearing manufacturer's database by way of the serial number of the bearing assembly and hence, the quality control may be accomplished readily and quickly.

In a constitution wherein a cover is fitted in a vehicle-inner end of the outer ring member, the IC chip may be provided on an outside surface of the cover. If the IC chip is provided on the outside surface of the cover defining the vehicle-inner end of the bearing assembly, the data (information) stored in the IC chip may be readily retrieved.

In a case where a seal portion is disposed at a vehicle-inner end of an annular space defined between the outer ring member and the inner ring member, the IC chip may be embedded in a seal body of the seal portion, the seal body being formed from a rubber or synthetic resin. If the IC chip is embedded in the seal body of the seal portion disposed at the vehicle-inner end of the bearing assembly, the data (information) stored in the IC chip may be readily retrieved.

In a constitution wherein a pulser ring is disposed on an outer periphery of a vehicle-inner end of the inner ring member, the IC chip may be embedded in the pulser ring. If the IC chip is embedded in the pulser ring disposed at the vehicle-inner end of the bearing assembly, the data (information) stored in the IC chip may be readily retrieved.

In a case where the inner ring member comprises: an inner shaft; and an inner-ring component member fitted on an outer periphery of a vehicle-inner end of the inner shaft, the IC chip may be embedded in a paint coating applied on a spigot joint of the inner shaft. If the IC chip is embedded in the paint coating on the spigot joint of the inner shaft, the spigot joint defining the vehicle-outer end of the bearing assembly, the data (information) stored in the IC chip may be readily retrieved.

In a case where the inner ring member comprises: the inner shaft; and the inner-ring component member fitted on the outer periphery of the vehicle-inner end of the inner shaft and where the inner shaft is formed with a wheel mounting flange on an outer periphery thereof, the flange projecting radially outwardly from a portion adjacent to a vehicle-outer end of the inner shaft, the IC chip may be provided at a tip-end face of a bolt for fixing a wheel to the wheel-mounting flange. If the IC chip is provided at the tip-end face of the wheel-mounting bolt defining the vehicle-outer end of the bearing assembly, the data (information) stored in the IC chip may be readily retrieved.

In a case where the inner ring member comprises: the inner shaft; and the inner-ring component member fitted on the outer periphery of the vehicle-inner end of the inner shaft, the IC chip may be provided at a bottom of a center hole of the inner shaft. If the IC chip is provided at the bottom of the center hole of the inner shaft, the bottom defining the vehicle-outer end of the bearing assembly, the data (information) stored in the IC chip may be readily retrieved.

### Brief Description of the Drawings

- FIG. 1: is a sectional view for illustrating a wheel bearing assembly according to one embodiment of the invention;

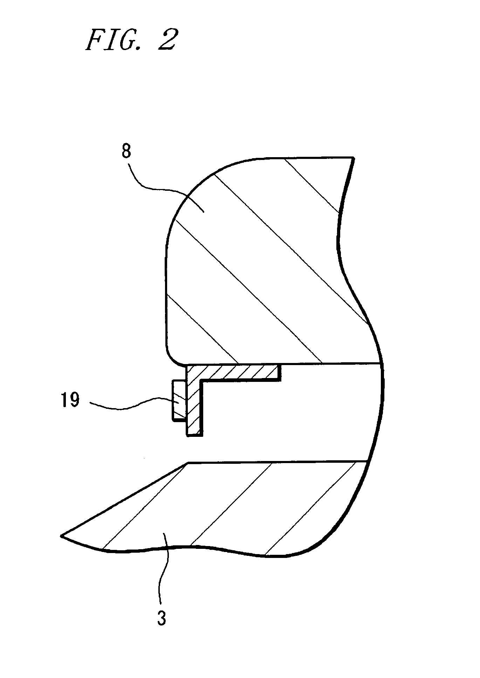

- FIG. 2: is an enlarged view for illustrating a seal portion on a vehicle-inner side of the wheel bearing assembly according to the one embodiment of the invention;
- FIG. 3: is a sectional view for illustrating a wheel bearing assembly according to another embodiment of the invention; and
- FIG. 4: is an enlarged view for illustrating a seal portion on a vehicle-inner side of the wheel bearing assembly according to the above embodiment of the invention.

### BEST MODES FOR CARRYING OUT THE INVENTION

Bearing assemblies according to the preferred embodiments of the invention will hereinafter be described in details with reference to the accompanying drawings.

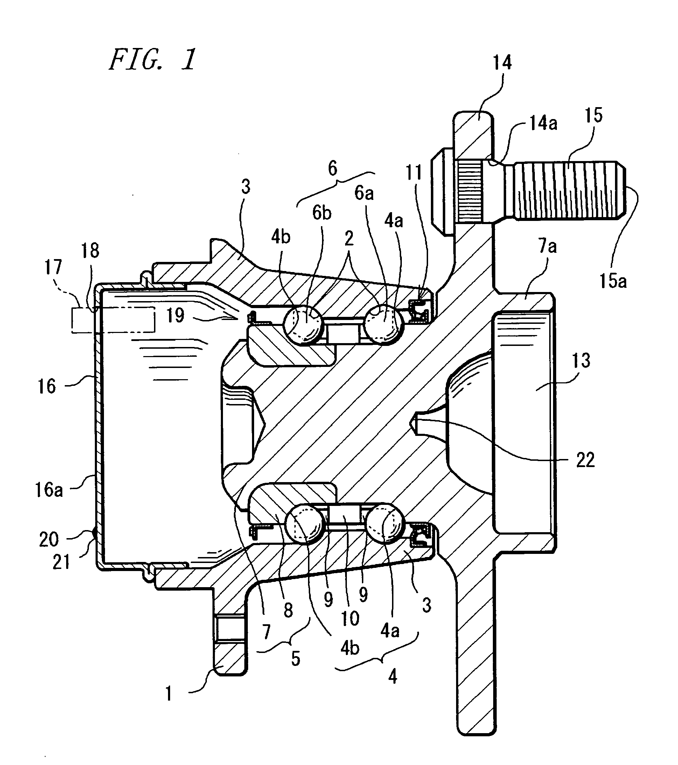

FIG. 1 shows a bearing assembly according to one embodiment of the invention. The bearing assembly is a wheel bearing assembly disposed at a driven-wheel of a vehicle. The bearing assembly includes: an outer ring member 3 secured to a vehicle body via a vehicle mounting flange 1 and including a plurality of rows of outer raceways 2 formed on an inner periphery thereof; an inner ring member 5 disposed radially inwardly of the outer ring member 3 in a concentric relation therewith and including a plurality of rows of inner raceways 4 on an outer periphery thereof; and a plurality of rows of balls 6 as rolling elements rollably interposed between the respective raceways 2, 4 of the outer ring member 3 and the inner ring member 5.

The inner ring member 5 includes an inner shaft 7; and an inner-ring component member 8 which is separate from the inner shaft 7 and fitted on an outer periphery of a vehicle-inner end (the left-hand side as seen in FIG. 1) of the inner shaft 7. The inner ring member 5 is rotatably supported by the outer ring member 3 via the plurality of rows of balls 6.

Out of the balls 6 in the plurality of rows, balls in one row 6a contact an inner raceway 4a defined by a vehicle-outer portion (the right-hand side as seen in FIG. 1) of an outer periphery of the inner shaft 7, whereas balls in the other row 6b contact an inner raceway 4b defined by an outer periphery of the inner-ring component member 8. The balls in each row 6a, 6b are retained by a cage 9 as circumferentially arranged with equal spacing. Disposed between an inner periphery of the outer ring member 3 and the outer periphery of the inner shaft 7 is a seal portion 11 for sealing a bearing space 10 between these members on a vehicle-outer side thereof.

The inner shaft 7 is formed with a spigot joint 7a, to be assembled with the wheel, at a vehicle-outer end face thereof. The spigot joint 7a is centrally formed with a recess 13. The inner shaft 7 is further formed with a radially outwardly extended hub flange 14 at a vehicle-outer portion of the outer periphery thereof. A brake disc rotor and the wheel (not shown) are mounted to the hub flange 14 by means of hub bolts 15 press-inserted in a plurality of bolt holes 14a formed in the hub flange 14.

A cylindrical closed-end cover 16 is fitted in an inner periphery of a vehicle-inner end of the outer ring member 3. The cover 16 is formed with a sensor-mounting hole 18 for mounting a sensor 17 for sensing a rotational speed of the wheel. The rotational speed of the wheel is detected by the sensor 17 detecting a pulser ring 19 which is mounted to an outer periphery of a vehicle-inner end of the inner-ring component member 8 and is rotated together with the inner-ring component member 8.

The invention is characterized by an IC chip disposed at a vehicle-outer end or vehicle-inner end of such a bearing assembly. According to the embodiment, the IC chip 20 is secured to an outside surface 16a of the cover 16 by means of a seal 21. The seal 21 may be replaced by a paint which may be applied to the outside surface 16a of the cover 16 for securing the IC chip 20 thereto. The IC chip 20 may be protected from muddy water and the like by covering a surface of the IC chip with the seal 21 or the paint.

The IC chip 20 can store a variety of information items such as manufacture date, manufacture's factory, serial number and manufacture history, thereby offering easy trace of the wheel bearing assembly shipped from factory. In such a case where need arises to inspect or replace the bearing assembly after shipment, a suitable reader may be used to retrieve the information from the IC chip 20, whereby the lot number to which the wheel bearing assembly belongs and the quantity of the lot are readily determined.

This permits the inspection or replacement (including part replacement) of the wheel bearing assembly to be accomplished quickly and correctly. Furthermore, the manufacture history of the wheel bearing assembly may be directly retrieved from the IC chip. Otherwise, the retrieved serial number or lot number may be used to retrieve the manufacture history of the wheel bearing assembly from database of a bearing manufacturer.

Hence, the quality control may be performed quickly and easily. In addition, the IC chip 20 is attached to the outside surface 16a of the cover 16, thus negating the need to disassemble the bearing assembly for extracting the IC chip even in a state where the bearing assembly is mounted in the vehicle. Accordingly, a relatively simple operation such as dismounting a tire from the vehicle permits the retrieval of the data (information) stored in the IC chip 20. If the bearing assembly as assembled in the product should be broken, the above data (information) can be retrieved so long as the IC chip 20 is not damaged.

The term "manufacture history", as used herein, may include all kinds of information items related to the manufacture of the product of interest and may be exemplified by information on the components (parts) of the product and general information thereof. More specifically, the information on the components (parts) may include information items about individual parts constituting the bearing assembly, which include, for example, the respective design values, measurement values, manufacturer's serial numbers, materials and the like of the inner ring member, outer ring member, ball and the like.

The information on the components (parts) may also include information items about the kind and quantity of lubricant used in the bearing assembly, the material of the seal portion for sealing the annular space between the inner ring member and the outer ring member, and the like. The general information means information about the bearing assembly as a completed product, and may include a variety of measurement data items determined in the manufacture process, which include dimensional data such as the width and gap of the bearing assembly when manufacturing the same, runout precision of the flange, caulking conditions, hammering test data, sensor output test data and the like.

The following merit may be offered by enhancing the availability of the manufacture history including the information on the parts. In a case where parts of the same type are used in a plurality of types of wheel bearing assemblies, for example, a different type of bearing assembly including this part may be subjected to quick inspection, maintenance service or replacement.

The term "vehicle-outer end" or "vehicle-inner end", as used herein, does not mean only the farthest portion from the center of the bearing assembly. In view of the feature of the invention which resides in easy approach to the IC chip, the term "end" as used herein can mean a portion which is located in the vicinity of either of the opposite ends of the bearing assembly mounted in the vehicle and which provides easy retrieval of the data in the IC chip. Therefore, a "bottom of a center hole" to be described hereinafter is also included in the "end" defined herein because the bottom of the center hole is a portion providing the easy retrieval of the data in the IC chip.

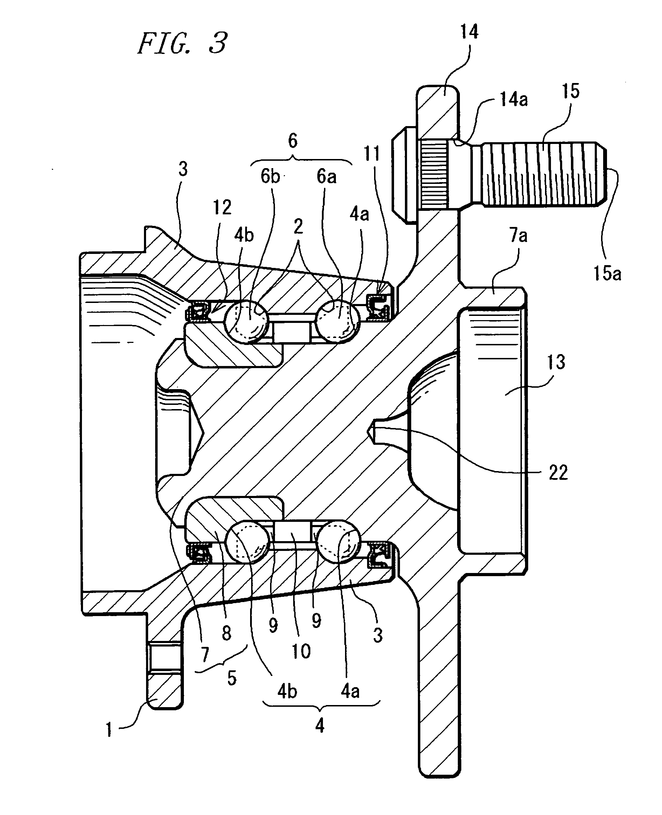

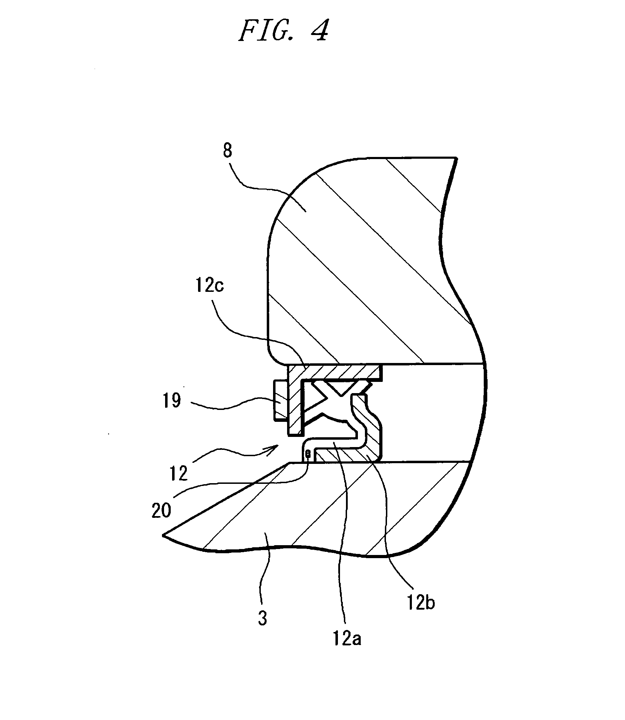

FIG. 3 illustrates a wheel bearing assembly according to another embodiment of the invention. FIG. 4 shows in enlarged dimension a vehicle-inner seal portion according to this embodiment. In this embodiment, the vehicle-inner cover 16 of the embodiment shown in FIG. 1 is replaced by a seal portion 12 which is interposed between the inner periphery of the outer ring member and the outer periphery of the inner-ring component member 8 for sealing the bearing space 10 on the vehicle-inner side.

The seal portion 12 includes: a core 12b fixed to an inner periphery of a vehicle-inner end (the left-hand side as seen in FIG. 3) of the outer ring member 3; a seal body 12a formed from an elastic material such as rubber or synthetic resin and secured to the core 12b; and a slinger 12c fixed to an outer periphery of the vehicle-inner end of the inner-ring component member 8 as retained in sliding contact with a distal end of the seal body 12a.

Mounted to a vehicle-inner end of the slinger 12c is the pulser ring 19 formed from an elastic material, such as rubber or synthetic resin, admixed with magnetic powder such as ferrite and having an annular shape. The pulser ring 19 is magnetized in such a manner that S polarity and N polarity appear alternately in the circumferential direction thereof. The IC chip 20 is embedded in a vehicle-inner end of the seal body 12a.

The bearing assembly provided with the IC chip 20 at the vehicle-inner end thereof provides an easy approach to the IC chip 20 such that the data (information) stored in the IC chip 20 may be readily retrieved. The IC chip 20 may also be embedded in the pulser ring 19 instead of the seal body 12a. In this case, as well, the data (information) stored in the IC chip 20 may be readily retrieved.

While the illustration is omitted, the IC chip 20 may also be mounted to a tip-end face 15a of the hub bolt 15 by means of an adhesive, a seal or the like in a manner to cover the IC chip 20. Paint is normally applied to the spigot joint 7a of the inner shaft 7 to form a paint coating thereon. The paint may be used to attach the IC chip 20 to the spigot joint 7a at an inner periphery thereof, for example.

Alternatively, the IC chip 20 may also be attached to a bottom 22 of the center hole of the inner shaft 7 (FIG. 1) by means of the adhesive or paint in a manner to cover the 1C chip. Otherwise, a recess may be formed in a so-called chaplet projected from an inner periphery of the center hole, so as to embed the IC chip 20 in the recess. In any of these cases, it is easy to approach the IC chip 20 so that the data (information) stored in the IC chip 20 may be readily retrieved.

While the foregoing embodiments illustrate the wheel bearing assembly for use in the driven wheel, the invention is not limited to this. As a matter of course, the invention is also applicable to a bearing assembly for use in driving wheel. While the figures show the examples of the bearing assemblies of an inner-ring rotation type, the invention is also applicable to a bearing assembly of an outer-ring rotation type. In addition, the invention is also applicable to a bearing assembly employing tapered rollers as the rolling elements. While the foregoing embodiments belong to a so-called third-generation bearing assemblies, the invention is also applicable to bearing assemblies of the second and other generations.

## Claims

1. A wheel bearing assembly comprising:
- an outer ring member;
- an inner ring member disposed radially inwardly of the outer ring member in concentric relation therewith; and
- rolling elements interposed between the outer ring member and the inner ring member,
wherein an IC chip is provided at a vehicle-outer end or a vehicle-inner end of the bearing assembly.

2. The wheel bearing assembly according to Claim 1,
wherein a cover is fitted in a vehicle-inner end of the outer ring member, and the IC chip is provided on an outside surface of the cover.

3. The wheel bearing assembly according to Claim 1,
wherein a seal portion is disposed at a vehicle-inner end of an annular space defined between the outer ring member and the inner ring member, and the IC chip is embedded in a seal body of the seal portion, the seal body being formed from rubber or synthetic resin.

4. The wheel bearing assembly according to Claim 1,
wherein a pulser ring is disposed on an outer periphery of a vehicle-inner end of the inner ring member, and the IC chip is embedded in the pulser ring.

5. The wheel bearing assembly according to Claim 1,
wherein the inner ring member comprises: an inner shaft; and an inner-ring component member fitted on an outer periphery of a vehicle-inner end of the inner shaft, and the IC chip is embedded in a paint coating applied on a spigot joint of the inner shaft.

6. The wheel bearing assembly according to Claim 1,
wherein the inner ring member comprises: an inner shaft; and an inner-ring component member fitted on an outer periphery of a vehicle-inner end of the inner shaft, wherein an inner shaft is formed with a wheel mounting flange on an outer periphery thereof, the flange projecting radially outwardly from a portion adjacent to a vehicle-outer end of the inner shaft, and wherein the IC chip is provided at a tip-end face of a bolt for assembling the wheel mounting flange with a wheel.

7. The wheel bearing assembly according to Claim 1,
wherein the inner ring member comprises: an inner shaft; and an inner-ring component member fitted on an outer periphery of a vehicle-inner end of the inner shaft, and the IC chip is provided at a bottom of a center hole of the inner shaft.
